# EUROPÄISCHE PATENTSCHRIFT

(11) **EP 2 758 644 B1**
(45) Veröffentlichungstag und Bekanntmachung des Hinweises auf die Patenterteilung: **09.11.2016**
(21) Anmeldenummer: 12762534.1
(22) Anmeldetag: 19.09.2012
(51) Int. Cl.: F01N 3/20

(54) **WÄRMETAUSCHER FÜR EINE DOSIEREINHEIT EINER SCR-ABGASNACHBEHANDLUNGSEINRICHTUNG**
HEAT EXCHANGER FOR A METERING UNIT OF AN SCR EXHAUST-GAS AFTERTREATMENT DEVICE
ÉCHANGEUR DE CHALEUR DESTINÉ À UNE UNITÉ DE DOSAGE D'UN DISPOSITIF DE POST-TRAITEMENT DES GAZ D'ÉCHAPPEMENT PAR SCR

(30) Priorität: 19.09.2011 DE 102011053742
(43) Veröffentlichungstag der Anmeldung: 30.07.2014
(73) Patentinhaber: Cummins Ltd., Middlesex, TW18 2BD (GB)
(72) Erfinder: SCHMITT, Johannes, 72250 Freudenstadt (DE)
(74) Vertreter: Beyer, Andreas
(86) Internationale Anmeldenummer: PCT/EP2012/003904
(87) Internationale Veröffentlichungsnummer: WO 2013/041218

(56) Entgegenhaltungen:
- EP-A1- 2 105 592
- DE-C1- 19 856 366

## Beschreibung

### Stand der Technik

Die Erfindung betrifft einen Luft-Wärmetauscher für eine Dosiereinheit einer SCR-Abgasnachbehandlungseinrichtung. Des Weiteren betrifft die Erfindung eine Dosiereinheit sowie eine Abgasnachbehandlungseinrichtung mit einem derartigen Luft-Wärmetauscher.

In modernen Verbrennungskraftmaschinen, insbesondere Dieselmotoren werden hohe Anforderungen an die Reduktion des Abgases, insbesondere die Verminderung von NOₓ-Emissionen gestellt. Hierzu hat sich in jüngster Zeit das SCR-Abgasnachbehandlungsverfahren (Selective Catalytic Reduction) durchgesetzt, bei der eine wässrige Harnstofflösung in das Abgas einer Verbrennungskraftmaschine, die ein Dieselmotor oder ein Benzinmotor sein kann, eingespritzt wird. Durch einen nachgeschalteten SCR-Katalysator kann die Stickstoffemission der Verbrennungskraftmaschine bei Zugabe von wässriger Harnstoff-Wasserlösung (HWL) deutlich reduziert werden. Da die Dosiereinheit, insbesondere das Dosierventil im Abgasstrom angeordnet ist und demzufolge einer hohen Temperaturbelastung ausgesetzt ist, muss zur Erhöhung der Lebensdauer und zur genauen Dosierung die Bauteiltemperatur der Dosiereinheit stabilisiert werden. Bei zu hohen Bautelltemperaturen droht das Versagen der Dosiereinheit bzw. die Zugabe einer ungenauen Menge von HWL, so dass die Abgasnachbehandlung nur ungenügend erfolgt.

Aus dem Stand der Technik ist bekannt, die Dosiereinheit mittels eines Kühlflüssigkeitskreislaufes zu temperieren, wobei insbesondere HWL als Kühlmittel eingesetzt wird. Demzufolge ist ein geschlossener und flüssigkeitsdichter HWL-Kühlkreislauf erforderlich, bei dem eine im Vergleich zur eingespritzten HWL relativ große Menge an HWL um die Dosiereinheit bzw. durch das Dosierventil fließt, um eine Kühlung zu ermöglichten. Eine gattungsgemäße Abgasnachbehandlungseinrichtung mit Dosiereinheit ist beispielsweise in der DE 10 2008 012 780 A1 dargestellt, wobei zur Kühlung der Dosiereinheit ein HWL-Kühlkreislauf eingesetzt wird und ein HWL-Teilstrom zumindest einen Teilbereich einer Dosiereinheit in einem Kühlkanal umströmt.

Die DE 10 2008 012 780 A schlägt einen HWL-Wärmetauscher für ein Dosierventil vor, der spiralförmige Windungen aufweist. HWL wird durch eine Zuführleitung in den Wärmetauscher eingeleitet und durch eine Abführleitung abgeführt. Im HWL-Kühlkreislauf ist ein zweiter luftgekühlter Wärmetauscher außerhalb der Dosiereinheit vorgesehen, der durch Fahrtwind oder Fahrtstrom eines Luftgebläses gekühlt wird, und den erwärmten HWL-Fluidstrom temperiert. Dazu ist die Bereitstellung eines geschlossenen HWL-Kühlkreislauf erforderlich, was zu einer erheblichen Erhöhung der Komplexität des Kühlvorgangs führt und die konstruktive Auslegung der Dosiereinheit erschwert, da HWL-Hin- und Rückleitung sowie ein zusätzlicher Wärmetauscher vorgesehen werden muss. Des Weiteren ist HWL extrem kriechfähig und weist eine hohe Korrosionsaggressivität gegenüber Dichtungen und verschiedenen Materialien auf. Daher können nur hochspezielle Dichtungen im Kühlkreislauf eingesetzt werden, wobei eine Leckage aufgrund der hohen Aggressivität des HWL-Fluids sehr schnell zum Ausfall des Kühlkreislaufs und damit zur Beschädigung der Abgasnachbehandlungseinrichtung führen kann. Gegen einen Einsatz von HWL als Kühlmittel spricht zum einen der niedrige Gefrierpunkt von -11° C, so dass besonders im Winter die Gefahr eines Einfrieren des Kühlkreislaufs und damit eine Beschädigung der Abgasnachbehandlungseinrichtung droht. Zum anderen ist HWL äußerst aggressiv gegenüber verschiedensten Materialien, so dass Dichtungen und Kühlkanäle aus Edelstahl oder zugelassenen Kunststoffen bestehen müssen. HWL, das auch als Ad-Blue bezeichnet wird und aus einer wasserklaren, synthetisch hergestellten 32.5% Lösung aus hochreinem Harnstoff in demineralisiertem Wasser besteht, soll nicht direkt dem Sonnenlicht ausgesetzt werden und bei einer Temperatur von -5° bis 20°C aufbewahrt werden. Bei Erhöhung der Temperatur über 30°C kann HWL vorteilhafte Eigenschaften verlieren, so dass HWL als Kühlmittel grundsätzlich ungeeignet ist. Schließlich droht insbesondere bei Hochlastphasen des Motors, in denen beispielsweise bis zu 8 bis 9 kg HWL pro Stunde in den Abgasstrom eingespritzt werden muss, und außerdem die Förderleistung einer eingesetzten HWL-Pumpe begrenzt ist, die Gefahr, dass der zur Verfügung stehende HWL-Kühlstrom, insbesondere in Hochlastphasen nicht ausreichend ist, so dass eine kritische Temperatur der Dosiereinheit überschritten wird.

Daneben ist aus dem Stand der Technik, beispielsweise aus der DE 10 2009 004 944 A1, eine flüssigkeitsgekühlte Dosiereinheit bekannt, bei der Kühlflüssigkeit wie Kondenswasser eines Fahrzeugs, Regenwasser oder Scheibenwischwasser auf Kühlrippen der Dosiereinrichtung aufgeträufelt wird. Auch hier ergibt sich der Nachteil, das zum einen eine hohe Menge von Kühlflüssigkeit bereitgestellt werden muss, das Kühlsystem aufgrund der flüssigkeitsdichten Auslegung eine hohe Komplexität aufweist, und bei einem Ausfall des Flüssigkeitsnachschubs eine Überhitzung der Dosiereinheit droht.

Aus der DE 198 56 366 C1 ist eine Abgasnachbehandlungsvorrichtung für eine Brennkraftmaschine bekannt, die eine SCR-Dosiereinheit beinhaltet. Durch Umfassen des in der Dosiereinrichtung enthaltenen Einspritzventils mittels eines unmittelbar mit der Abgasleitung verbundenen, doppelwandigen Ventilaufnahmekörpers wird es ermöglicht, Druckluft in einen Luftspalt zwischen einer Außenwandung und einer Innenwandung des Ventilaufnahmekörpers einzublasen und dadurch zumindest die abgasnahen Teile des Einspritzventils zu kühlen.

Ausgehend von den oben dargestellten Nachteilen des Stands der Technik ist es Aufgabe der Erfindung, eine Temperiervorrichtung für eine Dosiereinheit bereitzustellen, die ohne Einsatz eines geschlossenen Flüssigkeitskühlkreislaufs eine ausreichende Kühlung bereitstellt, ausfallsicher ist, mit geringem konstruktiven Aufwand auch in bestehende Dosiereinheiten integrierbar ist und eine effiziente Kühlung, insbesondere in Hochlastphasen des Motors für eine Dosiereinheit bzw. für das Dosierventil einer Abgasnachbehandlungseinrichtung gewährleistet. Ferner soll eine schnelle Auftauwirkung der Dosiereinheit bei niedrigen Temperaturen, insbesondere unterhalb der Gefriertemperatur der HWL erreicht werden, um in der Startphase in kalten Jahreszeiten eine effiziente Abgasnachbehaltung zu ermöglichen.

Diese Aufgabe wird durch einen Wärmetauscher gemäß dem Anspruch 1, sowie durch eine Dosiereinheit und eine Abgasnachbehandlungseinrichtung gemäß den nebengeordneten Ansprüchen 9 und 13 gelöst. Vorteilhafte Ausgestaltungen der Erfindung sind Gegenstand der Unteransprüche.

### Offenbarung der Erfindung

Gemäß einem ersten erfindungsgemäßen Aspekt wird ein Wärmetauscher für eine Dosiereinheit einer SCR-Abgasnachbehandlungseinrichtung (Selective Catalytic Reduction) vorgeschlagen, wobei durch die Dosiereinheit eine einstellbare Menge eines Fluids in einen Abgasstrang einer Verbrennungskraftmaschine abgebbar ist. Die Verbrennungskraftmaschine kann ein Benzin- oder Dieselmotor sein. Bevorzugt ist die Verbrennungskraftmaschine ein Antriebsmotor eines Fahrzeugs, insbesondere eines Lkws oder Pkws. Der Wärmetauscher weist zumindest einen luftdurchströmbaren Fluidkanal auf, der zumindest um einen Teilbereich einer Außenumfangswandung eines Dosierventils der Dosiereinheit geführt ist. Somit schlägt die Erfindung einen Wärmetauscher vor, bei dem ein Luftstrom durch einen Fluidkanal strömen kann, und der Fluidkanal um eine Teiloberfläche und vorzugsweise um die gesamte Oberfläche eines Dosierventils einer Dosiereinheit zur Kühlung bzw. Erwärmung geführt ist.

Das Dosierventil ist im Abgasstrang der Verbrennungskraftmaschine stromaufwärts von einem Katalysator angeordnet und gibt HWL in dosierten Mengen in den Abgasstrang zur Durchführung einer SCR, d.h. einer selektiv katalytischen Reduktion zur Verminderung von Stickoxiden im Abgas ab. Aufgrund der erhöhten Temperaturbeanspruchung stellt der Wärmetauscher einen Kühlstrom bzw. Wärmestrom bereit, der zumindest das Dosierventil unterhalb einer kritischen Betriebstemperatur kühlt bzw. erwärmt. Hierdurch wird die Lebensdauer des Dosierventils erhöht und eine gewünschte Dosierung von HWL gewährleistet. Der Luftstrom kann beispielsweise über ein Luftansaugsystem herangeleiteter Fahrtwind oder zugeführte Ausgangsluft einer Klimaanlage sein, und kann sowohl passiv zugeführt werden, als auch aktiv, beispielsweise durch Ventilatoren oder Luftverdichter in den Wärmetauscher eingeblasen werden. Denkbar ist auch die Abzweigung eines Teilluftstroms oder des Gesamtluftstroms eines Turbogenerators zu Temperierungszwecken. Der Wärmetauscher kann beispielsweise in Form eines Hohlzylinders oder einer Zylinders mit Wärmetauscherrippen ausgeführt sein. Er dient somit zur Kühlung bei einem heißen Abgasstrom und zur Erwärmung bzw. zum Auftauen der Dosiereinheit bei kalten Witterungseinflüssen, er ist somit je nach Bedarf Heizung oder Kühlung der Dosiereinheit.

Erfindungsgemäß ist der Fluidkanal helixartig um die Außenumfangswandung des Dosierventils geführt, und weist drei oder mehr Schraubengänge auf. Somit ist der Fluidkanal in Form eines Schraubengangs um die Außenumfangswandung des Dosierventils angeordnet, so dass der Luftstrom tangential zur in der Regel zylinderförmigen Außenumfangswandung streicht, um eine möglichst hohe Wärmeübergangsfläche zu überstreichen. Der Luftstrom wird entlang eines verlängerten Weges um die Außenumfangswandung geleitet, und kann somit eine hohe Menge Wärmeenergie des Dosierventils aufnehmen und an die Luft abgeben. Empirische Untersuchungen haben gezeigt, dass aufgrund der großen Berührungsfläche eine im Vergleich zu einer einfachen Luftumströmung um bis zu 30% höhere Wärmeübergangsleistung erreichbar ist. Im Gegensatz zu einer Feststoffkühlung oder Flüssigkeitskühlung kann die Luftkühlung bzw. -erwärmung frei dosiert werden, hat keine hohen Ansprüche an die Dichtheit des Wärmetauschersystems, wobei insbesondere bei hoher Motorleistungen ein großer Luftstrom bereitstellbar ist, der zum Beispiel abhängig von der Fahrgeschwindigkeit, einer Klimaanlagenleistung oder einer Drehzahlabgabe des Motors variiert werden kann. Der Luftstrom kühlt bzw. erwärmt insbesondere das Dosierventil und den Dosiermagneten, so dass eine exakte Abgabe einer vordefinierbaren Menge

HWL-Fluids in den Abgasstrom abhängig von der Belastungskurve der Verbrennungskraftmaschine einstellbar ist.

Grundsätzlich kann der Wärmetauscher einteilig ausgebildet sein. Gemäß einer weiteren vorteilhaften Ausbildung der Erfindung kann der Wärmetauscher mehrteilig, insbesondere zweiteilig ausgeführt sein, wobei ein erstes inneres Wärmetauscherteil einen wärmeleitfähigen Hohlzylinder zur Aufnahme der zu kühlenden bzw. zu erwärmenden Dosiereinheit umfasst und eine umlaufende wärmeleitfähige Rippe aufweist, die radial abstehend um den Außenmantel des Hohlzylinder bevorzugt helixartig als Spiralrippe geführt ist. Ein zweites äußeres und zylinder- oder topfförmiges Wärmetauscherteil kann zur Ausbildung einer Außenwand des Fluidkanals passgenau über den Außenumfang der Rippe aufgeschoben oder aufgeschraubt werden, so dass das Volumen zwischen Rippenoberfläche und Zylinderaußenoberfläche des ersten Wärmetauscherteils und Innenoberfläche des zweiten Wärmetauscherteils den Fluidkanal definiert wird. Somit schlägt dieses Ausführungsbeispiel einen zweiteiligen Wärmetauscher vor, der aus einem inneren Hohlzylinder besteht, dessen Außenwandungen beispielsweise eine Spiralrippe aufweist, und die über den zu temperierenden Bereich der Dosiereinheit, insbesondere das Dosierventil bzw. den Dosierflansch mit Dosierdüse und Elektromagneten übergeschoben werden kann. Das erste Wärmetauscherteil besteht aus wärmeleitfähigem Material, insbesondere Aluminium oder Kupfer. Ein zweites zylinderförmiges oder topfförmiges Wärmetauscherteil, das passgenau zum Außenumfang des ersten Wärmetauscherteils ausgebildet ist, kann über die Dosiereinheit bzw. über das erste Wärmetauscherteil aufgeschoben werden, um in Verbindung mit den Spiralrippen einen helixartigen Fluidkanal zu definieren. Der Fluidkanal wird aus der Rippenoberfläche, dem Außenumfang des Hohlzylinders des ersten Wärmetaüscherteils sowie der Innenwandung des Hohlzylinders des zweiten Wärmetauscherteils gebildet. Das zweite Wärmetauscherteil kann beispielsweise aus Kunststoff oder einem anderen leicht formbaren, günstig herstellbaren und temperaturresistenten Material besteht. Auch ist denkbar, den Außenumfang des Dosierventils mit einer Spiralrippe zu versehen, oder diese nachträglich aufzubringen, beispielsweise aufzuwickeln, zu schweißen oder mittels Befestigungsmittel zu befestigen, so dass lediglich ein zweites Wärmetauscherteil über das Dosierventil mit Rippenverlauf aufgeschoben werden muss, um einen Wärmetauscher bereitzustellen. Aufgrund des zweiteiligen Aufbaus können insbesondere bei der Montage des Dosierventils durch einfaches Aufschieben des zweiten Wärmetauscherteils die Fluidkanäle ausgebildet werden, wobei beispielsweise die Anschlüsse an einem Luftversorgungssystem im zweiten Wärmetauscherteil angeordnet werden können. Somit ergibt sich ein günstig herstellbares und für verschiedene, bereits existierende Dosiereinheiten einsetzbares Wärmetauscherteil, das auch problemlos in existierenden Motoren nachgerüstet werden kann.

Gemäß einer weiteren vorteilhaften Ausbildung der Erfindung besteht das erste Wärmetauscherteil aus wärmeleitfähigem Material, insbesondere aus Metall und bevorzugt aus Aluminium oder Kupfer. Aluminium bzw. Kupfer weisen eine sehr hohe elektrische und auch wärmeleitfähige Eigenschaft auf, und können somit eine hohe Kühl- bzw. Heizleistung für einen Fluidluft-Wärmetauscher bereitstellen.

Gemäß einer weiteren vorteilhaften Ausbildung der Erfindung kann das zweite Wärmetauscherteil auf das erste Wärmetauscherteil aufgeschraubt werden und aus einem temperaturresistenten Kunststoff gefertigt sein. Aufgrund eines spiralförmigen Verlaufs der Spiralrippe des ersten Wärmetauscherteils bietet es sich an, das zweite Wärmetauscherteil derart auszubilden, dass es auf das erste Wärmetauscherteil aufgeschraubt werden kann. Hierzu kann insbesondere die Innenwandung des zweiten Wärmetauscherteils ebenfalls eine spiralartige Rippe aufweisen, um so eine Verschraubungswirkung gegenüber dem ersten Wärmetauscherteil bereitzustellen.

Gemäß einer weiteren vorteilhaften Ausbildung der Erfindung kann eine trichterförmige Lufteinlassöffnung an einer ersten, der Austrittsdüse des Dosierventils gegenüberliegenden Seite des Wärmetauschers angeordnet sein, und bevorzugt am zweiten Wärmetauscherteil angeordnet sein. Die Lufteinlassöffnung kann beispielsweise einstückig mit dem zweiten Wärmetauscherteil ausgebildet sein, und die Lufteinlassöffnung kann bevorzugt in axialer Richtung des Dosierventils ausgerichtet sein. Gemäß diesem Ausführungsbeispiel wird vorgeschlagen, dass der Luftstrom axial von oben, d.h. von der der Ventildüse abgewandten Seite in die spiralförmigen Fluidkanäle des Wärmetauschers eingeleitet wird, so dass eine einfache Zugänglichkeit für eine Luftversorgungsvorrichtung an die "Kühlseite" des Dosierventils möglich ist, wodurch eine kompakte, axial-ausgerichtete Zuführung der Luft erreicht wird. Somit kann Umgebungsluft, beispielsweise Fahrtluft oder Klimaanlagenluft zur Zuführung gekühlter bzw. erwärmter Luft an der "kalten Seite" der Dosiereinheit angeschlossen sein und in axialer Richtung Luft in die Dosiereinheit bzw. das Dosierventil einblasen. Durch den spiralförmigen Verlauf der Fluidkanäle wird diese Luft tangential entlang dem Zylinder des Dosierventils herumgeführt, um das Dosierventil zu kühlen bzw. erwärmen. Das Spiralrippenrohr wird nicht wie üblich von der Seite angeströmt, sondern die Zuführung bzw. Abführung erfolgt in axialer Richtung der Dosiereinheit und die Luft strömt dann in tangentialer Richtung um die Dosiereinheit herum. Daraus ergeben sich eine geringe Baugröße und ein hoher Volumenstrom bei geringem Fluidvolumen des Wärmetauschers.

Gemäß einer weiteren vorteilhaften Ausbildung der Erfindung kann am Außenumfang des Wärmetauschers ein zumindest teilweise umlaufender Luftaustrittsbereich an der Austrittsdüsenseite des Dosierventils angeordnet sein. Somit schlägt diese Ausbildung vor, dass der Luftaustritt an der "heißen Seite", d.h. an der Austrittsdüsenseite in der Nähe des Abgasstroms austreten kann, und sich in die Umgebung ausbreitet bzw. einen Teilbereich der Abgasleitung zusätzlich temperiert. Zur Abführung der Luft ist kein gesondertes System notwendig, so dass lediglich eine Luftzuführung, aber keine Luftabführung konstruktiv vorgesehen werden muss.

Gemäß einer weiteren vorteilhaften Ausbildung der Erfindung kann am Beginn und/oder am Ende des Fluidkanals die Rippe radial verringert sein, um ein erhöhtes Ein- und/oder Austrittsvolumen für die Temperierluft bereitzustellen. Somit schlägt diese Ausbildung vor, dass die Rippe des ersten Wärmetauscherteils zunächst nicht die ganze Fläche zwischen erstem und zweitem Wärmetauscherteil einnimmt, sondern sich radial verkleinert, so dass zum einen das Aufschrauben des zweiten Wärmetauscherteils erleichtert ist und zum anderen eine erhöhte Menge von Luft in die spiralartigen Fluidkanäle eindringen und aus ihnen austreten kann. In einer einteiligen Ausführung des Wärmetauschers können der erste bzw. letzte Spiralgang so ausgeführt sein, dass sie sich nicht vollständig zwischen innerer und äußerer Zylinderwandung erstrecken, so dass die Luft gleichzeitig in mehrere Spiralgänge verteilt eintreten kann. Hierdurch wird eine Erhöhung des Volumenstroms und eine Verringerung von Wirbeleffekten erreicht. Die Luft kann durch die Lufteinlassöffnung, die vorteilhaft trichterförmig ausgebildet ist und ein großes Luftstromvolumen aufnehmen kann, eintreten, gleichmäßig verteilt durch die ersten Rippen streichen und an der Luftaustrittsöffnung, die insbesondere den Gesamtumfangsbereich des unteren Endes des Wärmetauschers umfasst, durch den bzw. die letzten Spiralgänge austreten.

Gemäß einer weiteren vorteilhaften Ausbildung der Erfindung kann die der zu temperierenden Außenwand des Dosierventils zugewandte Kühlwand des Wärmetauschers mit dem Dosierventil mittels eines wärmeleitfähigen Materials, insbesondere einer Graphitpackung, einer Wärmeleitpaste, einem Metallgranulat oder Ähnlichem wärmeleitfähig verbunden sein. Alternativ zu einer einstückigen Ausbildung der Außenwand des Dosierventils als Spiralrippenzylinder kann die Innenwandung des Wärmetauschers gegenüber der Außenwandung des Dosierventils mittels eines wärmeleitfähigen Materials gekoppelt sein. Insbesondere bei einer Nachrüstung einer Dosiereinheit mit einem erfindungsgemäßen Wärmetauscher kann beispielsweise durch Anbringung einer Graphitpackung, die eine hohe Wärmeleitfähigkeit aufweist und sich gut den Konturen am Übergang einer Außenwandung des Dosierventils zur Innenwandung des Wärmetauscherzylinders anpassen kann, eine besonders gute Wärmeübertragung zwischen Luft, Wandung des Dosierventils und des darin strömenden HWL-Fluids bereitgestellt werden. Der zur Aufnahme des Dosierventils bestimmte innere Hohlzylinder des Wärmetauschers kann deutlich größer als der Außenumfang des Ventils sein, somit können Wärmetauscher für unterschiedliche Dosierventildurchmesser bereitgestellt werden. Durch die wärmetechnische Kopplung mittels eines volumenfüllbaren Materials kann der Wärmetauscher leicht eingebaut werden.

Gemäß einem weiteren Aspekt der Erfindung wird eine SCR-Dosiereinheit vorgeschlagen, die einen Wärmetauscher nach einem der vorgenannten Ausführungsbeispiele umfasst. Ein Luftansaugsystem ist an der Dosiereinheit angeordnet, so dass beim Starten der Verbrennungskraftmaschine in kalter Jahreszeit Heizluft und im Betrieb Kühlluft in den Wärmetauscher einleitbar ist. Bevorzugt hängt die Menge der zuzuführenden Luft bzw. deren Temperatur von dem Lastzustand der Verbrennungskraftmaschine ab. So kann die Temperierluft beispielsweise Fahrtwind eines Fahrzeugs oder durch einen Ventilator, dessen Luftströmleistung entsprechend der Drehzahl der Verbrennungskraftmaschine oder der Abgastemperatur variiert, verdichtete Luft sein. Des Weiteren ist denkbar, dass die Kühlluft von einer Klimaanlage, die von der Verbrennungskraftmaschine angetrieben wird, bereitgestellt wird. Je höher die Drehzahl der Verbrennungskraftmaschine, desto tiefer kann dabei die Temperatur der Temperierluft bzw. um so höher kann der Luftstrom sein, und desto besser ist die Temperierwirkung. Das Luftansaugsystem kann beispielsweise ein in Richtung der Fahrzeugfront gerichtetes Luftkanalsystem sein, das Fahrtwind einsaugt, oder kann ein Anschlussstutzen an einer Klimaanlage zur Kühlung, Erwärmung bzw. Klimatisierung des Innenraums eines Fahrzeugs sein. Es werden keine hohen Anforderungen an die Dichtheit des Luftansaugsystems gestellt, jedoch ist vorteilhaft denkbar, dass das Luftansaugsystem in axialer Richtung zur Dosiereinheit die Luft in einen trichterförmigen Lufteinlassbereich des Wärmetauschers einleitet. Da der Wärmetauscher als geschlossene Einheit vorgeschlagen ist, kann dieser bei Bedarf von einem in den Außenabmessungen vergleichbaren flüssigkeitsführenden Wärmetauscher ersetzt werden. Somit wird eine modulare Dosiereinheit vorgeschlagen, deren Wärmetauscher je nach Bedarf als Luftwärmetauscher oder, beispielsweise bei einem Einsatz einer Verbrennungskraftmaschine in geschlossener Umgebung wie Bergwerk, Schiff, Fabrikhalle oder ähnliches, als Öl- oder Wasserwärmetauscher ausgeführt sein kann. So kann bedarfsweise oder bei einem Defekt der Wärmetauscher ersetzt oder angepasst werden. Dies erhöht die Einsatzmöglichkeiten und die Variabilität der Dosiereinheit. Der Wärmetauscher dient dabei zur Kühlung wie auch zur Erwärmung/Auftauen der Dosiereinheit.

Gemäß einer weiteren vorteilhaften Ausbildung der Dosiereinheit kann das Luftansaugsystem einen Luftansaugstutzen umfassen, der einstückig mit dem zweiten Wärmetauscherteil ausgebildet ist. Der Luftansaugstutzen kann bevorzugt Luft in eine trichterförmige Lufteinlassöffnung leiten und ermöglicht den Anschluss an ein Luftansaugsystem, so dass eine große Menge Temperierluft in den Wärmetauscher eingeleitet werden kann.

Gemäß einer weiteren vorteilhaften Ausbildung der Dosiereinheit kann das Luftansaugsystem ein geregeltes Luftverdichtungsgebläse umfassen, so dass je nach Betriebszustand der Verbrennungskraftmaschine unterschiedliche Mengen Temperierluft in den Wärmetauscher einleitbar sind. Durch Anordnung eines Luftverdichtungsgebläses können beispielsweise abhängig von der Temperatur des Abgasstroms bzw. einer Drehzahl oder einem Drehmoment der Verbrennungskraftmaschine unterschiedliche Mengen von Kühl- bzw. Heizluft in die Dosiereinheit eingeleitet werden. Das Luftverdichtungsgebläse kann beispielsweise über einen Temperaturfühler innerhalb der Dosiereinheit gesteuert sein und ermöglicht eine geregelte Temperierung der Dosiereinheit.

In einem weiteren Ausführungsbeispiel der Dosiereinheit kann das Luftansaugsystem Luft aus einem Klimaanlagensystem eines Fahrzeugs entnehmen, denn dieses stellt insbesondere bei hohen Außentemperaturen bzw. bei einer hohen Beanspruchung eines Antriebsmotors und der sich daraus ergebenden hohen Abgasstromtemperatur eine hohe Kühlleistung zur Verfügung, so dass auf diese Weise die Kühlleistung für die Dosiereinheit bei hoher Abgastemperatur effizient gesteigert werden kann.

In einem abschließenden erfindungsgemäßen Aspekt wird eine Abgasnachbehandlungseinrichtung für eine Verbrennungskraftmaschine vorgeschlagen, insbesondere für einen Fahrzeugmotor, bevorzugt einen Dieselmotor, der eine Dosiereinheit nach einen der vorgenannten Ausführungsbeispiele umfasst.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Blockdiagramm einer Abgasnachbehandlungseinrichtung;
- Fig. 2: eine Schnittdarstellung einer Dosiereinheit des Stands der Technik;
- Fig. 3: eine Schnittdarstellung eines Ausführungsbeispiels eines erfindungsmäßen Luftkühlelements;
- Fig. 4: eine Schnitt- und Perspektivdarstellung eines ersten Ausführungsbeispiels einer erfindungsgemäßen Dosiereinheit;
- Fig. 5: verschiedene Perspektivdarstellungen eines weiteren Ausführungsbeispiels eines erfindungsgemäßen Luftkühlelements.

In den Figuren sind gleiche oder gleichartige Komponenten mit gleichen Bezugszeichen beziffert.

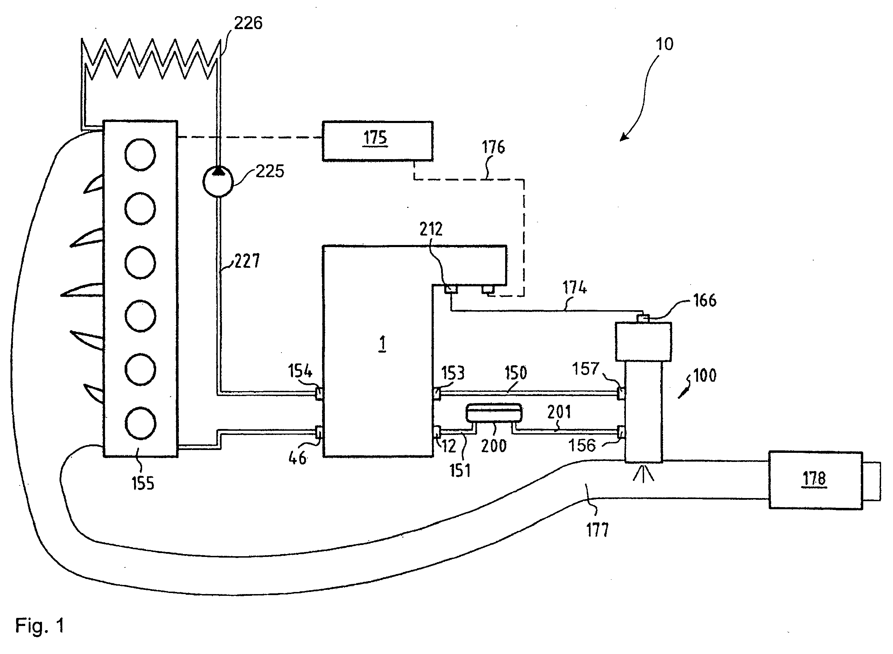

Die Fig. 1 zeigt eine typische Abgasnachbehandlungseinrichtung 10. Die Abgasnachbehandlungseinrichtung 10 umfasst eine Pumpeneinheit 1, eine Dosiereinheit 100 zur dosierten Einspritzung von HWL in einen Abgasstrang 177 einer Verbrennungskraftmaschine 155 stromaufwärts eines SCR-Katalysators 178 und einen HWL-Tank 200. Alle Komponenten der Abgasnachbehandlungseinrichtung 10 sind so ausgeführt, dass ein Einfrieren der drucklosen HWL nicht zu Beschädigungen führt.

Die Pumpeneinheit 1 erhält über eine Signalleitung 176 Steuerinformationen von einem Steuergerät 175, das mit der Motorsteuerung des Kraftfahrzeugantriebsmotors 155 kommuniziert. Diese Signalleitung leitet unter anderem CAN-Bus-Signale weiter und erhöht die HWL-Einspritzleistung bei vermehrtem Abgasausstoß einer Verbrennungskraftmaschine 155.

An einem HWL-Sauganschluss 12 entnimmt die Pumpeneinheit 1 HWL aus einem HWL-Tank 200, um diese im Umwälzbetrieb zur Versorgung der Dosiereinheit 100 zu pumpen. Auf der gegenüberliegenden Seite der Pumpeneinheit 1 sind zwei Kühlwasseranschlüsse 46, 154 vorgesehen. Durch die beiden Kühlwasseranschlüsse 46, 154 wird Kühlwasser zur Kühlung der Pumpeneinheit 1 umgewälzt. Die beiden Kühlwasseranschlüsse 46, 154 sind in den Kühlwasserkreislauf 227 eines Kraftfahrzeugantriebsmotors 155 geschaltet, somit kann die Pumpeneinheit 1 durch das heiße Kühlwasser vom Kühlwasserkreislauf 227 des Kraftfahrzeugantriebsmotors 155 aufgetaut bzw. auf betriebswarmer Temperatur gehalten werden. Der Kühlwasserkreislauf lässt das Kühlwasser durch den Motorblock der Verbrennungskraftmaschine 155 mittels einer Kühlwasserpumpe 225 fließen, die Wärme wird über einen Luft-Kühlwasser-Wärmetauscher 226 an die Umgebungsluft bzw. den Fahrtwind abgegeben.

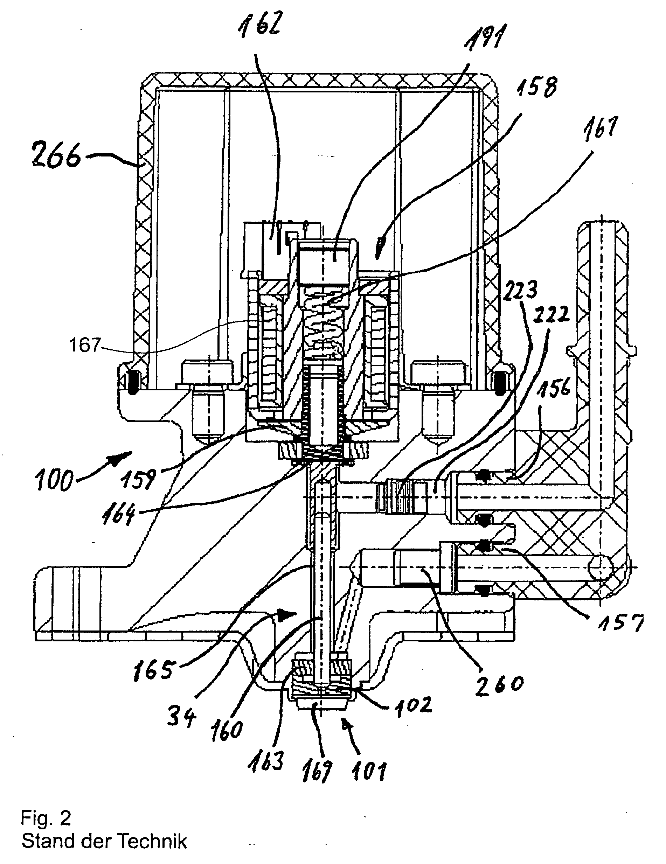

Die Pumpeneinheit 1 entnimmt über den HWL-Sauganschluss 12 HWL aus dem Tank 200, setzt diese unter Druck und gibt sie über den HWL-Druckanschluss 153 an die Dosiereinheit 100 ab. Über die externe HWL-Leitung 150 ist der HWL-Druckanschluss 153 mit dem Zulaufanschluss 157 der Dosiereinheit 100 verbunden. Über die HWL-Leitung 151 ist der HWL-Sauganschluss 12 der Pumpeneinheit 1 mit einem HWL-Tank 200 verbunden und mit einer weiteren HWL-Leitung 201 ist der Ablaufanschluss 156 der Dosiereinheit 100 mit HWL-Tank 200 verbunden, so dass sich ein kontinuierlicher Kreislauf der HWL über eine in Fig. 2 gezeigte Rücklaufblende 223 in der Dosiereinheit 100 bildet. Ein mehrpoliger Kontaktstecker 212 stellt die Verbindung zur Steuereinheit 175 und zur Spannungsversorgung her. Die Kommunikation erfolgt über CAN-Bus-Signale. Eingedüst wird die HWL durch ein Dosierventil 34 der Dosiereinheit 100 in einen Bereich des Abgasstranges 177, der vor einem Katalysator 178 liegt. Die Dosiereinheit 100 ist über einen mehrpoligen Kontaktstecker 166, eine elektrische Leitung 174 und den mehrpoligen Kontaktstecker 212 mit der Pumpeneinheit 1 verbunden.

Die in Fig. 2 dargestellte Dosiereinheit 100 des Stands der Technik umfasst das elektromagnetische Dosierventil 34. Dieses elektromagnetische Dosierventil 34 weist einen Elektromagneten 158 mit einem Anker 159 auf, der eine Schraubendruckfeder 161 gegen deren Federkraft zusammendrücken kann, so dass der HWL-Druck eine Nadel 160 in die geöffnete Stellung schieben kann. Die Schraubendruckfeder 161 stützt sich dabei an einem Gewindebolzen 191 ab, mit welchem die Vorspannung der Schraubendruckfeder 161 einstellbar ist. Wird der Elektromagnet 158 nicht über seine Anschlüsse 162 bestromt, so drückt die Schraubendruckfeder 161 die Nadel 160 wieder gegen einen Ventilsitz 102 in eine geschlossene Stellung. Die Nadel 160 ist dabei relativ lang und einerseits in einem Linear-Gleitlager 163 geführt. Andererseits erfolgt die Führung mittels einer Dichtungsmembran 164, die den Elektromagneten 158 vor der aggressiven HWL schützt. Zwischen diesen beiden Führungen ist ein Kühlkanal 165 vorgesehen, der den Kreislauf zwischen zwei Dosiereinheitsanschlüssen 156, 157 schließt. Der Kühlkanal 165 wird von einem umlaufenden Strom von HWL durchflossen, der die Dosiereinheit 100 kühlt, die sich durch die Abwärme des Abgasstrangs aufheizt. Dosiereinheitsanschlüsse 156, 157 sind an den HWL-Leitungen 150, 201 angeschlossen. Von dem einen als Zulauf ausgebildeten Dosiereinheitsanschluss 157 wird die HWL über ein Filtersieb 260 durch mehrere Ausnehmungen im vorderen Linear-Gleitlager 163 zum Ventilsitz 102 geleitet. Wird die HWL im bestromten Zustand des Elektromagneten 158 durch eine zentrale Öffnung im Ventilsitz 102 hindurch gelassen, so wird die HWL durch eine Zerstäuberdüse 101 geleitet. Diese Zerstäuberdüse 101 ist als Dralldüse ausgeführt und weist zwei übereinander gelegte Düsenscheiben auf. Diese beiden Düsenscheiben sind mittels eines Austrittsdüseneinsatzes 169 gegen den Ventilsitz 102 gespannt. Der Austrittsdüseneinsatz 169 weist einen - nicht näher ersichtlichen - sich trichterförmig aufweitenden Austritt auf. Die Dosiereinheit 100 weist vor dem Dosiereinheitsanschluss 156 in einem Rücklaufkanal 222 die Rücklaufblende 223 auf. Über diese Rücklaufblende 223 wird die ständige Durchströmung der Dosiereinheit 100 mit HWL sichergestellt. Dadurch wird zum einen die Temperatur der Dosiereinheit 100 niedrig gehalten. Zum anderen wird beim Ausschalten der Stromversorgung der Druck in der Abgasnachbehandlungseinrichtung auf Tankdruck abgebaut, ohne dass dafür Energie zum Öffnen eines Ventils notwendig ist. Im elektromagnetischen Dosierventil 34 kann sich die HWL gegen die Dichtungsmembran 164 ausdehnen.

Nachteilig an obiger Ausführung ist die Kühlung des Dosierventils 34 durch den umlaufenden HWL-Strom. Die HWL-flüssigkeitsberührten Teile, insbesondere Dichtungen und Leitungen müssen aus Edelstahl oder zugelassenen Kunststoffen bestehen, da die Harnstofflösung eine hohe chemische Aggressivität gegenüber Metallen und Fahrzeuglacken aufweist. So erzeugt selbst eine geringe Undichtigkeit des Kühlsystems große Schäden, da austretendes HWL eine hochkorrosive Wirkung entfaltet, so dass die Undichtigkeit stark zunimmt, HWL verloren geht und die Kühlung der Dosierungseinheit 100 aussetzt. Somit besteht die Gefahr einer Überhitzung der Dosiereinheit 100, einer Beschädigung der Abgasnachbehandlungseinrichtung 10 und eines Ausfalls der Katalyse.

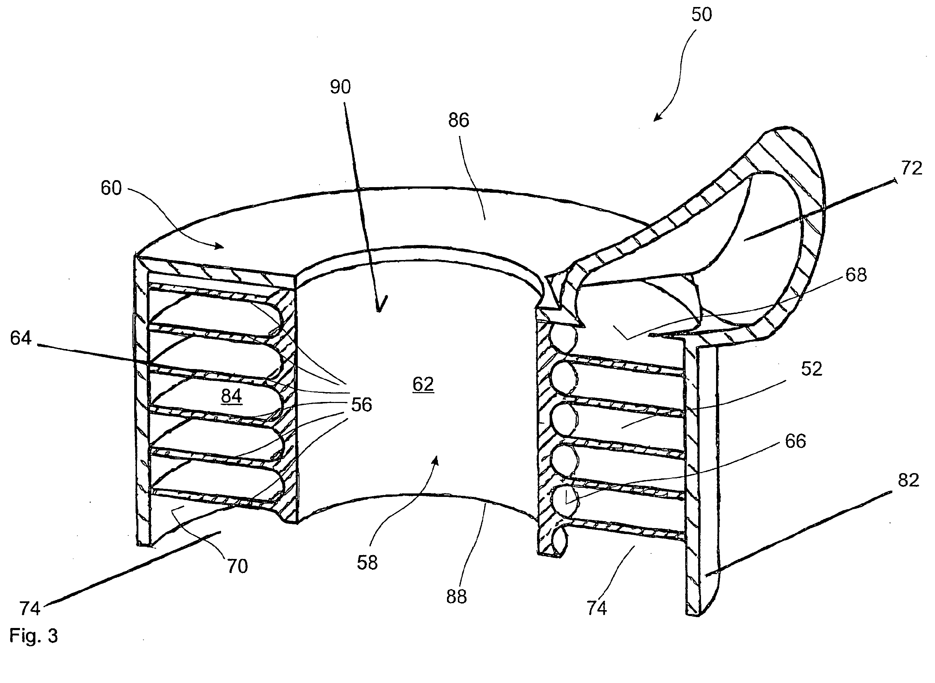

In der Fig. 3 ist ein Ausführungsbeispiel eines Wärmetauschers 50 dargestellt, der aus einem ersten Wärmetauscherteil 58 und einem zweiten Wärmetauscherteil 60 besteht. Das erste Wärmetauscherteil 58 ist ein Hohlzylinder 62, der Spiralrippen 64 aufweist, die helixartig um den Außenumfang 66 des Hohlzylinders 62 geführt sind und mit diesem einstückig ausgebildet sind. Das erste Wärmetauscherteil 58 ist aus Aluminium gefertigt. An seiner Innenoberfläche 90 wird eine kühlende Wirkung beim Durchströmen von Luft durch die Fluidkanäle 84 erzeugt, so dass bei einem wärmeleitfähigen Übergang zu einer Außenwandung einer Dosiereinheit (nicht dargestellt) eine hohe Wärmeabfuhr über die durchströmende Kühlluft bereitgestellt werden kann. Das zweite Wärmetauscherteil 60 ist zylinderförmig bzw. topfförmig ausgebildet und weist eine Lufteinlassöffnung 72 auf, die trichterförmig ausgebildet ist und sich axial zur Ausrichtung des Wärmetauschers 50 erstreckt. Das zweite Wärmetauscherteil 60 kann auf den Außenumfang der Kühlrippen 64 des ersten Wärmetauscherteils aufgeschoben werden. Hierdurch definieren die Innenwandung 70 des zweiten Wärmetauscherteils 60, die Kühlrippenoberfläche 68 und die Außenwandung 66 des Hohlzylinders 62 des ersten Wärmetauscherteils Fluidkanäle 84. Diese sind als Schraubengänge 56 um den Innenumfang des Hohlzylinders 62 geführt. Axial gegenüberliegend zur Lufteinlassöffnung 72 ist ein Luftaustrittsbereich 74 definiert, durch den die Luft am Umfang des Wärmetauschers 50 austreten kann.

Somit weist der Wärmetauscher 50 auf der Oberseite 86, die einer Düsenaustrittsseite 101 einer Dosiereinheit 100 gegenüberliegt, eine trichterförmige Lufteinlassöffnung 72 auf und auf der Unterseite des Wärmetauschers 88, die auf der Düsenaustrittsseite 101 bzw. dem Abgasstrang 177 einer Verbrennungskraftmaschine 155 liegt, einen Luftaustrittsbereich 74, der den gesamten Umfang des topfförmigen Wärmetauschers 50 umfasst. Die Zylinderinnenoberfiläche 90 des ersten Wärmetauscherteils kann gegenüber der Außenwandung der Dosiereinheit 100 bzw. des Dosierventils 34 durch einen Graphitpackung wärmeleitend verbunden sein. Der Zylinderaußenmantel 82 des zweiten Wärmetauscherteils 60 umhüllt den Dosierzylinder und kann innerhalb eines weiteren Gehäuses 266 der Dosiereinheit 100 angeordnet sein. Die Kühlluft strömt axial in den trichterförmigen Einlassbereich 72 des zweiten Wärmetauscherteils 60 ein, läuft spiralartig um den Außenumfang der Dosiereinheit 100 herum und tritt an der Unterseite 88 in dem Luftaustrittsbereich 74 am gesamten Umfangsbereich des Wärmetauschers 50 aus.

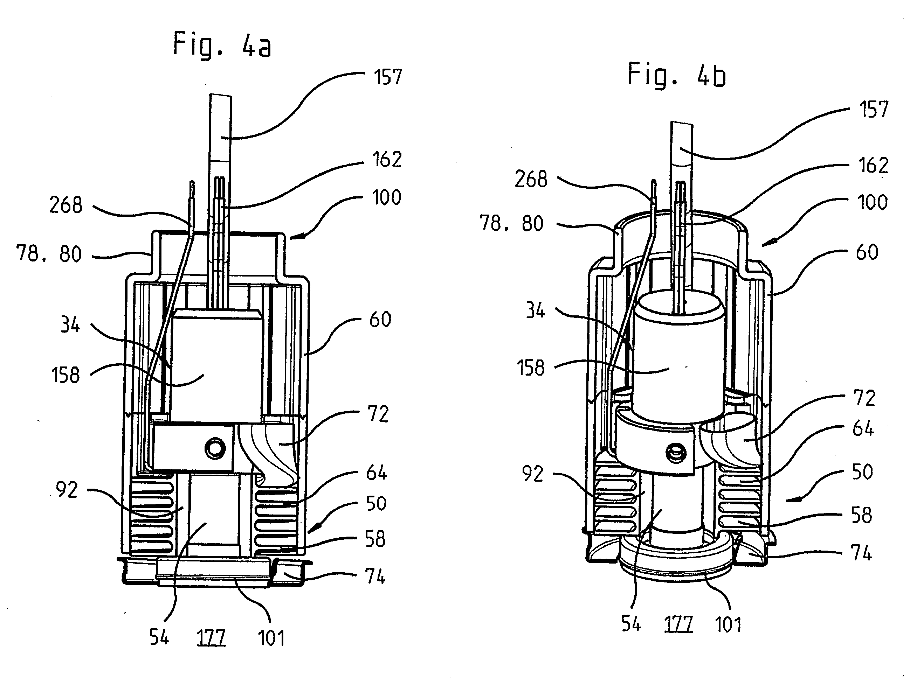

In der Fig. 4 ist ein weiteres Ausführungsbeispiel einer Dosiereinheit 100 in einer Querschnittsdarstellung in Fig. 4a und einer perspektivischen Darstellung in Fig. 4b gezeigt, die einen Wärmetauscher 50 umfasst. Die Dosiereinheit 100 weist einen HWL-Dosiereinheitsanschluss 156 auf, durch den HWL dem Dosierventil 34 zugeführt wird. Das Dosierventil 34 umfasst einen Elektromagneten 158 sowie eine nicht dargestellte Dosiermechanik, die sich in einem Zylinder befindet, dessen Außenumfang 54 zu kühlen ist. Die Zerstäuberdüse 101 der Dosiereinheit 100 gibt HWL in einen Abgasstrang 177 ab. Die Dosiereinheit 100 ist von einem zweiten Wärmetauscherteil 60 als Gehäuse umfasst, der in seinem oberen axialen Ende einen Luftansaugstutzen 80 eines ansonsten nicht dargestellten Luftansaugsystems 78 aufweist. An diesen Luftansaugstutzen 80 kann das Ende eines Ventilatorgebläses angeschlossen sein, um Kühlluft in das zweite Wärmetauscherteil 60 und damit in das Dosierventil 100 einzuführen. Der Außenumfang 54 des Dosierventils ist von einem ersten Wärmetauscherteil 58 umgeben, das eine trichterförmige Lufteinlassöffnung 72 aufweist, die axial in Richtung der Dosiereinheit 100 und damit zum Luftansaugstutzen 80 hin geöffnet ist. Das erste Wärmetauscherteil 58 weist spiralförmige Kühlrippen 64 auf, die im axial oberen und unteren Ende verjüngt sind, um einen turbulenzfreien und großvolumigen Lufteintritt bzw. Luftaustritt zu ermöglichen. Die Innenwandung des Hohlzylinders des ersten Wärmetauscherteils 58 ist mit der Außenwandung 54 des Dosierventils über eine Graphitpackung 92 als wärmeleitfähiges Material verbunden. Der Elektromagnet 158 hat des Weiteren einen elektrischen Anschluss 162, sowie eine Leitung 268 für einen Temperaturfühler, der zur Steuerung der Luftströmmenge herangezogen werden kann.

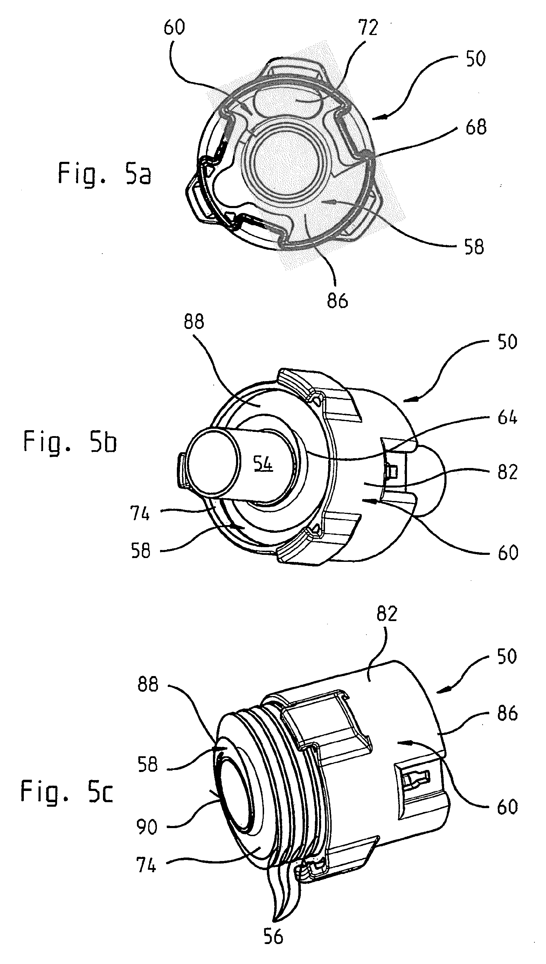

In den verschiedenen perspektivischen Darstellungen der Fig. 5 ist ein weiteres Ausführungsbeispiel eines Wärmetauschers 50 dargestellt. Der Wärmetauscher 50 besteht aus einem Spiralrippenrohr 58 als erstes Wärmetauscherteil, der einen Hohlzylinder 62 umfasst, um den spiralartig Kühlrippen 64 entlang der Außenwandung 66 verlaufen. Die Kühlrippen 64 sind an beiden axialen Enden radial reduziert, um einen möglichst turbulenzfreien Lufteintritt bzw. Luftaustritt zu gewährleisten. Das aus Aluminium bestehende erste Wärmetauscherteil 58 ist von einem zweiten topfförmigen und aus Kunststoff gefertigten Wärmetauscherteil 60 umgeben. Das zweite Wärmetauscherteil 60 weist nicht sichtbare Kunststoffrippen auf seiner Innenwandung auf, die in die helixartigen Kühlrippen 64 des ersten Wärmetauscherteils eingeschraubt werden können. Das zweite Wärmetauscherteil 60 weist auf einer Oberseite 86 eine Lufteinlassöffnung 72 auf, die trichterförmig ausgestaltet ist und durch die Kühlluft in die Fluidkanäle 52 eintreten kann. Die Fluidkanäle 52 sind durch die Kühlrippenobeffläche 68, den Außenumfang des Hohlzylinders 62 des ersten Wärmetauscherteils 58 und den Innenumfang 70 des zweiten Wärmetauscherteils 60 gebildet. Die Lufteinlassöffnung 72 ist an der Lufteintrittsseite 86 angeordnet. An der Unterseite des Wärmetauschers 88, die der Düsenaustrittsseite 101 eines Dosierventils 100 zugeordnet ist, kann die Luft am gesamten Umfang aus dem spiralartigen Kühlrippenverlauf 52 austreten. In Fig. 5a ist eine Sicht auf die Oberseite 86 des Wärmetauschers 50 dargestellt. Fig. 5b zeigt eine Sicht auf die Unterseite 88, an der die Luft durch den Luftaustrittsbereich 74 austreten kann. Fig. 5c zeigt einen halb aufgeschraubten Zustand von erstem und zweitem Wärmetauscherteil 58, 60, in dem die Schraubengänge 56 deutlich sichtbar sind. Der Zylindermantel 82 des zweiten Wärmetauscherteils ist so ausgeformt, dass er in einem Gehäuse der Dosiereinheit aufgenommen sein kann und der Innendurchmesser des Hohlzylinders 62 des ersten Wärmetauscherteils 58 ist derart dimensioniert, dass er das Dosierventil 100 mit Elektromagneten 158 umfasst. Zur Wärmekopplung kann ein wärmeleitfähiges Material zwischen der Innenwandung 62 des Hohlzylinders 62 und der Außenwandung 54 des Dosierventils 100 eingebracht werden, hierzu eignen sich Wärmeleitpaste oder eine Graphitpackung.

Die dargestellte Abgasnachbehandlungseinrichtung kann insbesondere bei schweren Nutzfahrzeugen Anwendung finden, welche zumeist mit einem Dieselmotor ausgeführt sind. Bei Dieselmotoren ist die NOx-Reduktion besonders notwendig. Auch sind die Bauraumverhältnisse und Beschleunigungen bei einem solchen schweren Nutzfahrzeug derart, dass sich die Anordnung einer infolge des Elektromagneten 158 relativ großen und schweren Dosiereinheit anbietet. Die Erfindung kann jedoch auch bei kleinen Personenkraftwagen Anwendung finden. Ferner kann die Erfindung auch bei Benzinmotoren Anwendung finden.

### Bezugszeichenliste

- 1: Pumpeneinheit
- 10: Abgasnachbehandlungseinrichtung
- 12: HWL-Sauganschluss
- 34: Dosierventil
- 46: Kühlwasseranschluss-Eingang
- 50: Wärmetauscher
- 52: Fluidkanal
- 54: Außenumfangswandung des Dosierventils
- 56: Schraubengang des Fluidkanals
- 58: erstes Wärmetauscherteil
- 60: zweites Wärmetauscherteil
- 62: Hohlzylinder
- 64: Wärmetauscherrippe
- 66: Zylinderaußenoberfläche des ersten Wärmetauscherteils
- 68: Rippenoberfläche
- 70: Innenoberfläche des zweiten Wärmetauscherteils
- 72: Lufteinlassöffnung
- 74: Luftaustrittsbereich
- 76: wärmeleitfähiges flexibles Material
- 78: Luftansaugsystem
- 80: Luftansaugstutzen
- 82: Zylindermantel des zweiten Wärmetauscherteils
- 84: Fluidkanalvolumen
- 86: Oberseite des Wärmetauschers - Lufteintrittseite
- 88: Unterseite des Wärmetauschers - Luftaustrittsseite
- 90: Zylinderinnenoberfläche des ersten Wärmetauscherteils - Wärmetauscherwand
- 92: wärmeleitfähiges Material
- 100: Dosiereinheit
- 101: Zerstäuberdüse - Dralldüse
- 102: Ventilsitz
- 150: HWL-Verbindungsleitung
- 151: HWL-Verbindungsleitung
- 153: HWL-Druckanschluss
- 154: Kühlwasseranschluss-Ausgang
- 155: Verbrennungskraftmaschine
- 156: HWL Dosiereinheitsanschluss - Ablauf
- 157: HWL-Dosiereinheitsanschluss - Zulauf
- 158: Elektromagnet
- 159: Anker
- 160: Ventilnadel
- 161: Schraubenfeder
- 162: Elektromagnet Anschluss
- 163: Linear-Gleitlager
- 164: Dichtungsmembran
- 165: Kühlkanal
- 166: Kontaktstecker
- 167: Magnetspule
- 169: Austrittsdüseneinsatz
- 174: Elektrische Steuer-/Versorgungsleitung
- 175: Steuergerät
- 176: CAN-BUS - Steuerleitung
- 177: Abgasstrang
- 178: Katalysator
- 191: Gewindebolzen
- 200: HWL-Tank
- 201: HWL-Verbindungsleitung
- 212: Kontaktstecker
- 222: Rücklaufkanal
- 223: Rücklaufblende
- 225: Kühlwasserpumpe
- 226: Luft-Kühlwasser-Wärmetauscher
- 227: Kühlwasserleitung
- 260: Filtersieb
- 266: Deckel
- 268: Temperatursensor-Anschlussleitung

## Patentansprüche

1. Wärmetauscher (50) für eine Dosiereinheit einer SCR-Abgasnachbehandlungseinrichtung (10), bei der durch eine Dosiereinheit eine einstellbare Menge eines Fluids in einen Abgasstrang (177) einer Verbrennungskraftmaschine (155) abgebbar ist und der Wärmetauscher (50) zumindest einen luftdurchströmbaren Fluidkanal (52) aufweist, der zumindest um einen Teilbereich einer Außenumfangswandung (54) eines Dosierventils (34) der Dosiereinheit (100) geführt ist,
**dadurch gekennzeichnet, dass** der Fluidkanal (52) helixartig um die Außenumfangswandung (54) des Dosierventils (34) geführt ist und bevorzugt drei oder mehr Schraubengänge (56) aufweist.

2. Wärmetauscher nach Anspruch 1,
**dadurch gekennzeichnet, dass** der Wärmetauscher (50) mehrteilig, zumindest zweiteilig ausgeführt ist, wobei ein erstes inneres Wärmetauscherteil (58) einen wärmeleitfähigen Hohlzylinder (62) zur Aufnahme des zu kühlenden bzw. erwärmenden Dosiereinheitsbereichs und eine umlaufende wärmeleitfähige Rippe (64) umfasst, die radial abstehend um den Außenmantel (66) des Hohlzylinder (62) bevorzugt helixartig als Spiralrippe geführt ist, und ein zweites äußeres topfförmiges Wärmetauscherteil (60) zur Definition einer Außenwand des Fluidkanals (52) passgenau über den Außenumfang der Rippe (64) des ersten Wärmetauscherteils (58) aufschiebbar oder aufschraubbar ist, so dass das Volumen (84) zwischen Rippenoberfläche (68) und Zylinderaußenoberfläche (66) des ersten Wärmetauscherteils (58) und Innenoberfläche (70) des zweiten Wärmetauscherteils (60) den Fluidkanal (52) definiert.

3. Wärmetauscher nach Anspruch 2,
**dadurch gekennzeichnet, dass** das erste Wärmetauscherteil (58) aus Metall, insbesondere Aluminium oder Kupfer gefertigt ist.

4. Wärmetauscher nach Anspruch 2 oder 3,
**dadurch gekennzeichnet, dass** das zweite Wärmetauscherteil (60) auf das erste Wärmetauscherteil (58) aufschraubbar ist und bevorzugt aus temperaturresistentem Kunststoff gefertigt ist.

5. Wärmetauscher nach einem der vorhergehenden Ansprüche,
**dadurch gekennzeichnet, dass** eine trichterförmige Lufteinlassöffnung (72) an einer ersten, der Austrittsdüse (101) des Dosierventils (34) gegenüberliegenden Seite (86) angeordnet ist und bevorzugt am zweiten Wärmetauscherteil (60) angeordnet, insbesondere einstückig ausgebildet ist, wobei die Lufteinlassöffnung (72) insbesondere in axialer Richtung des Dosierventils (34) ausgerichtet ist.

6. Wärmetauscher nach einem der vorhergehenden Ansprüche,
**dadurch gekennzeichnet, dass** ein am Außenumfang des Wärmetauschers (50) zumindest teilweise umlaufender Luftaustrittsbereich (74) an der Austrittsdüsenseite (88, 101) des Dosierventils (34) angeordnet ist.

7. Wärmetauscher nach einem der vorhergehenden Ansprüche 2 bis 6,
**dadurch gekennzeichnet, dass** am Beginn und/oder am Ende des Fluidkanals (52) die Rippe (64) radial verkleinert ist, um ein erhöhtes Ein- und/oder Ausströmvolumen von Luft bereitzustellen.

8. Wärmetauscher nach einem der vorhergehenden Ansprüche,
**dadurch gekennzeichnet, dass** die der zu kühlenden bzw. zu erwärmenden Außenumfangswandung (54) des Dosierventils (34) zugewandte Wärmeübergangswand (90) des Wärmetauschers (50) mit dem Dosierventil (34) mittels eines wärmeleitfähigen Materials (92), insbesondere einer Graphitpackung, einer Wärmeleitpaste, einem Metallgranulat oder Ähnliches, wärmeleitfähig verbunden ist.

9. SCR-Dosiereinheit (100) umfassend einen Wärmetauscher (50) nach einem der vorhergehenden Ansprüche,
**dadurch gekennzeichnet, dass** ein Luftansaugsystem (78) an der Dosiereinheit (100) angeordnet ist, welches dazu ausgestaltet ist, im Betrieb der Verbrennungskraftmaschine (155) Luft in den Wärmetauscher (50) einzuleiten.

10. Dosiereinheit nach Anspruch 9 mit einem Wärmetauscher (50) nach einem der Ansprüche 2 bis 7,
**dadurch gekennzeichnet, dass** das Luftansaugsystem (78) einen Luftansaugstutzen (80) umfasst, der einstückig mit dem zweiten Wärmetauscherteil (60) ausgebildet ist.

11. Dosiereinheit nach Anspruch 9 oder 10,
**dadurch gekennzeichnet, dass** das Luftansaugsystem (78) ein geregeltes Luftverdichtungsgebläse umfasst, um je nach Betriebszustand der Verbrennungskraftmaschine (155) unterschiedliche Mengen Luft in den Wärmetauscher (50) einzuleiten.

12. Dosiereinheit nach einem der Ansprüche 9 bis 11,
**dadurch gekennzeichnet, dass** das Luftansaugsystem (78) Luft aus einem Klimaanlagensystem eines Fahrzeugs entnehmen kann.

13. Abgasnachbehandlungseinrichtung (10) für eine Verbrennungskraftmaschine (155), insbesondere ein Fahrzeugmotor, vorzugsweise ein Dieselmotor, umfassend eine Dosiereinheit nach einem der Ansprüche 9 bis 12.

## Claims

1. Heat exchanger (50) for a dosing unit of an SCR exhaust gas aftertreatment device (10), wherein an adjustable volume of a fluid can be discharged by a dosing unit into an exhaust gas line (177) of an internal combustion engine (155), and wherein the heat exchanger (50) has at least one fluid channel (52) for airflow routed around at least a subregion of an outer peripheral wall (54) of a dosing valve (34) of the dosing unit (100),
**characterized in that** the fluid channel (52) is routed around the outer peripheral wall (54) of the dosing valve (34) in a helical manner and preferably comprises three or more windings (56).

2. Heat exchanger according to claim 1,
**characterized in that** the heat exchanger (50) is designed as a multi-part component, with at least two parts, wherein a first inner heat exchanger part (58) has a heat conductive hollow cylinder (62) for receiving the region of the dosing unit to be cooled or heated, and a heat conductive fin (64), which is routed as a spiral fin, preferably in a helical manner, around the outer shell (66) of the hollow cylinder (62) projecting radially from the same, and a second external, bowl-shaped heat exchanger part (60) for defining an outer wall of the fluid channel (52) is adapted to be pushed onto or screwed onto the outer periphery of the fin (64) of the first heat exchanger part (58) with a flush fit, such that the volume (84) between a fin surface (68) and the outer cylinder surface (66) of the first heat exchanger part (58) and the inner surface (70) of the second heat exchanger part (60) defines the fluid channel (52).

3. Heat exchanger according to claim 2,
**characterized in that** the first heat exchanger part (58) is made of metal, particularly aluminum or copper.

4. Heat exchanger according to claim 2 or 3,
**characterized in that** the second heat exchanger part (60) is adapted to be screwed onto the first heat exchanger part (58), and is preferably made of heat-resistant plastic.

5. Heat exchanger according to any of the preceding claims,
**characterized in that** a funnel-shaped air inlet opening (72) is arranged on a first side (86) opposite the outlet nozzle (101) of the dosing valve (34), and is preferably arranged on the second heat exchanger part (60), particularly as a single piece, wherein the air inlet opening (72) is in particular oriented along the axial direction of the dosing valve (34).

6. Heat exchanger according to any of the preceding claims,
**characterized in that** an air outlet space (74), which runs at least partially around the outer periphery of the heat exchanger (50), is arranged on the outlet nozzle side (88, 101) of the dosing valve (34).

7. Heat exchanger according to any one of the preceding claims 2 to 6, **characterized in that** the fin (64) is radially reduced at the start and/or the end of the fluid channel (52) in order to provide an increased inlet flow volume and/or outlet flow volume of air.

8. Heat exchanger according to any of the preceding claims,
**characterized in that** the heat transmission wall (90) of the heat exchanger (50) facing the outer peripheral wall (54) of the dosing valve (34) to be cooled and/or heated is connected to the dosing valve (34) in a heat conducting manner by means of a heat conductive material (92), in particular a graphite packing, a heat conductive paste, a metal granulate, or the like.

9. SCR dosing unit (100) including a heat exchanger (50) according to any one of the preceding claims,
**characterized in that** an air intake system (78) is arranged on the dosing unit (100), and is designed to direct air into the heat exchanger (50) during operation of the internal combustion engine (155).

10. Dosing unit according to claim 9, including a heat exchanger (50) according to any one of claims 2 to 7,
**characterized in that** the air intake system (78) has an air intake socket (80) which is designed as a single piece together with the second heat exchanger part (60).

11. Dosing unit according to claim 9 or 10,
**characterized in that** the air intake system (78) includes a regulated air compressor for directing different volumes of air into the heat exchanger (50) according to the operating state of the internal combustion engine (155).

12. Dosing unit according to any one of claims 9 to 11,
**characterized in that** the air intake system (78) is adapted to retrieve air from an air conditioner system of a vehicle.

13. Exhaust gas aftertreatment device (10) for an internal combustion engine (155), in particular a vehicle engine, preferably a diesel engine, including a dosing unit according to any one of claims 9 to 12.

## Revendications

1. Echangeur de chaleur (50) destiné à une unité de dosage d'un dispositif de post-traitement des gaz d'échappement par SCR (10), dans le cadre duquel une quantité réglable d'un fluide peut être distribuée par une unité de dosage dans une ligne d'échappement (177) d'un moteur à combustion interne (155) et l'échangeur de chaleur (50) présente au moins un canal de fluide (52) pouvant être traversé par de l'air et passant au moins autour d'une zone partielle d'une paroi périphérique extérieure (54) d'une soupape de dosage (34) de l'unité de dosage (100),
**caractérisé en ce que** ledit canal de fluide (52) est guidé en hélice autour de la paroi périphérique extérieure (54) de la soupape de dosage (34) et présente préférentiellement trois spires (56) ou plus.

2. Echangeur de chaleur selon la revendication 1,
**caractérisé en ce que** l'échangeur de chaleur (50) réalisé en plusieurs, et pour le moins deux parties, une première partie interne d'échangeur de chaleur (58) comportant un cylindre creux (62) thermiquement conducteur destiné à recevoir la zone d'unité de dosage à chauffer ou à refroidir et une nervure périphérique (64) thermiquement conductrice, qui est guidée radialement en saillie autour de l'enveloppe (66) du cylindre creux (62), préférentiellement en hélice sous forme de nervure spiralée, et une deuxième partie externe d'échangeur de chaleur (60) en forme de pot qui définit une paroi externe du canal de fluide (52) pouvant être glissée par ajustement précis ou vissée sur l'enveloppe extérieure de la nervure (64) de la première partie d'échangeur de chaleur (58) si bien que le volume (84) entre la surface de la nervure (68) et la surface extérieure de cylindre (66) de la première partie d'échangeur (58) et la surface interne (70) de la deuxième partie d'échangeur de chaleur (50) définit le canal de fluide (52).

3. Echangeur de chaleur selon la revendication 2,
**caractérisé en ce que** la première partie d'échangeur de chaleur (58) est réalisée à partir de métal, plus particulièrement d'aluminium ou de cuivre.

4. Echangeur de chaleur selon la revendication 2 ou 3,
**caractérisé en ce que** la deuxième partie d'échangeur de chaleur (60) est conçue de manière à pouvoir être vissée sur la première partie d'échangeur de chaleur (58) et réalisée à partir d'un matériau synthétique résistant à la chaleur.

5. Echangeur de chaleur selon l'une des revendications précédentes,
**caractérisé en ce qu'**une ouverture d'entrée d'air (72) en forme d'entonnoir est, préférentiellement sur la deuxième partie de l'échangeur de chaleur (60), agencée sur un premier côté (86) opposé à la buse de sortie (101) de la soupape de dosage (34) et plus particulièrement conçue d'une seule pièce, l'ouverture d'entrée d'air (72) étant plus particulièrement orientée dans la direction axiale de la soupape de dosage (34).

6. Echangeur de chaleur selon l'une des revendications précédentes,
**caractérisé en ce qu'**une zone de sortie d'air (74) entourant au moins partiellement le pourtour extérieur de l'échangeur de chaleur (50) est agencée du côté de la buse de sortie (88, 101) de la soupape de dosage (34).

7. Echangeur de chaleur selon l'une des revendications précédentes 2 à 6, **caractérisé en ce qu'**au début et/ou en bout du canal de fluide (52), la nervure (64) est radialement réduite pour fournir un volume d'entrée et de sortie d'air augmenté.

8. Echangeur de chaleur selon l'une des revendications précédentes,
**caractérisé en ce que** la paroi de transfert thermique (90) de l'échangeur de chaleur (50), laquelle paroi est tournée vers la paroi périphérique extérieure (54) à refroidir ou à chauffer de la soupape de dosage (34), est reliée de manière thermoconductrice à la soupape de dosage (34) au moyen d'un matériau (92) thermoconducteur, plus particulièrement au moyen d'une garniture en graphite, d'une pâte conductrice de chaleur, d'un granulat métallique ou similaire.

9. Unité de dosage SCR (100), comprenant un échangeur de chaleur (50) selon l'une des revendications précédentes,
**caractérisée en ce que** un système d'aspiration d'air (78) est agencé sur l'unité de dosage (100) laquelle est conçue de sorte que de l'air peut être introduit dans l'échangeur de chaleur (50) pendant le fonctionnement du moteur à combustion interne (155).

10. Unité de dosage selon la revendication 9, munie d'un échangeur de chaleur (50) selon l'une des revendications 2 à 7,
**caractérisée en ce que** le système d'aspiration d'air (78) comporte un raccord d'aspiration (80) réalisé d'un seul tenant avec la deuxième partie d'échangeur de chaleur (60).

11. Unité de dosage selon la revendication 9 ou 10,
**caractérisée en ce que** le système d'aspiration d'air (78) comporte une soufflante réglée pour, selon l'état de service du moteur à combustion interne (155), introduire différentes quantités d'air dans l'échangeur de chaleur (50).

12. Unité de dosage selon l'une des revendications 9 à 11,
**caractérisée en ce que** le système d'aspiration d'air (78) peut prélever de l'air du système de climatisation.

13. Dispositif de post-traitement de gaz d'échappement (10) pour un moteur à combustion interne (155), plus particulièrement un moteur d'avion, préférentiellement un moteur Diesel, muni d'une unité de dosage selon l'une des revendications 9 à 12.
